# EUROPÄISCHE PATENTSCHRIFT

(11) **EP 1 923 174 B1**
(45) Veröffentlichungstag und Bekanntmachung des Hinweises auf die Patenterteilung: **12.05.2010**
(21) Anmeldenummer: 07021955.5
(22) Anmeldetag: 13.11.2007
(51) Int. Cl.: B24B 55/10, B23Q 11/00

(54) **Absaugeinrichtung für ein motorisch angetriebenes Handwerkzeuggerät**
Suction device for a powered hand tool
Dispositif d'aspiration pour un outil manuel motorisé

(30) Priorität: 17.11.2006 DE 202006017584 U
(43) Veröffentlichungstag der Anmeldung: 21.05.2008
(73) Patentinhaber: Metabowerke GmbH, 72622 Nürtingen (DE)
(72) Erfinder: Kukla, Michael, 72669 Unterensingen (DE)
(74) Vertreter: Friz, Oliver

(56) Entgegenhaltungen:
- EP-A- 1 247 612
- EP-A- 1 506 840
- WO-A-02/07932
- US-A1- 2005 281 627

## Beschreibung

Die Erfindung betrifft eine Absaugeinrichtung für ein motorisch angetriebenes Handwerkzeuggerät mit den Merkmalen des Oberbegriffs des Anspruchs 1.

Eine derartige Absaugeinrichtung für einen Bohrhammer ist beispielsweise vorbeschrieben in EP-A-1 247 612, US 7,017,680 B2 oder in EP 1 714 732 A1 der Anmelderin.

Der genannte Staubauffangbehälter sollte bis auf die genannte Einmündung der Staubableitvorrichtung einerseits und der Ausmündung in Richtung auf die Unterdruck erzeugende Vorrichtung möglichst luftdicht ausgebildet sein.

Der vorliegenden Erfindung liegt die Aufgabe zugrunde, eine Absaugeinrichtung der vorausgehend geschilderten Art zu schaffen, bei der der Staubauffangbehälter einerseits luftdicht in das Absauggerät integriert ist und andererseits eine benutzerfreundliche Wartung der Absaugeinrichtung möglich ist.

Diese Aufgabe wird bei einer Absaugeinrichtung der genannten Art erfindungsgemäß dadurch gelöst, dass der Staubauffangbehälter von der Unterdruck erzeugenden Vorrichtung beaufschlagt ist und im Bereich der Einmündung der Staubableitvorrichtung in den Staubauffangbehälter über ein nachgiebiges Dichtungsmittel in axialer Richtung, in der der Staubauffangbehälter an den Gehäusekörper ansetzbar bzw. von dem Gehäusekörper abnehmbar ist, dichtend gegen den Gehäusekörper anliegt und dass das Dichtungsmittel beim Lösen des Staubauffangbehälters vom Gehäusekörper zugänglich und manuell greifbar sowie werkzeuglos entnehmbar ist, und dass das Dichtungsmittel eine ringscheibenförmige Flachdichtung ist, die die Einmündung der Staubableitvorrichtung in den Staubauffangbehälter geschlossen ringförmig umgibt.

Das nachgiebige Dichtungsmittel soll also insbesondere nicht an einer tief im Inneren der Absaugeinrichtung gelegenen Stelle vorgesehen sein, an der es nicht zugänglich ist. Insbesondere darf das Dichtungsmittel nicht unlösbar, insbesondere angeklebt, sein. Das Dichtungsmittel soll vielmehr an gut zugänglicher Stelle, also vorzugsweise in einem Abstand von höchstens 40 mm von einem Rand des Gehäusekörpers vorgesehen sein, welcher Rand eine Einsetzöffnung oder Ansetzöffnung für den Staubauffangbehälter begrenzt. Das Dichtungsmittel ist solchenfalls in komfortabler Weise greifbar und werkzeuglos entnehmbar. Da Dichtungsmittel bei dem hier in Rede stehenden rauen Einsatz, insbesondere bei Bohrhämmern, bei deren Betrieb große Erschütterungen und eine starke Schmutz- und Staubbeaufschlagung auftreten, einem hohen Verschleiß unterworfen sind, erweist sich die manuelle Zugänglichkeit und die werkzeuglose Austauschbarkeit als besonders vorteilhaft.

Nach einem besonders bevorzugten weitergehenden Erfindungsgedanken ist das Dichtungsmittel in zwei, um 180° verdrehten Orientierungen montierbar. Dies eröffnet die Möglichkeit, eine verschlissene Dichtung zu entnehmen und in einer um 180° verkehrten Orientierung erneut zu verwenden. Es kann dann eine noch intakte gegenüberliegende Seite dieser Dichtung während einer weiteren häufig ebenso langen Gebrauchsdauer die Dichtfunktion ausüben. Es ist nämlich häufig zu beobachten, dass Dichtungsmittel in Abhängigkeit von der Geometrie der gegeneinander drückenden Komponenten nur an einer Seite, also lokal, verschleißen. Insofern erweist sich dieser weitere Gedanke als höchst vorteilhaft.

Nach einem weiteren Erfindungsgedanken ist das Dichtungsmittel in einer selbstzentrierenden Aufnahme am Gehäusekörper lose schwimmend oder unter einer geringen die Dichtung gerade vor dem Herausfallen haltenden Vorspannung angeordnet. Durch eine selbstzentrierend ausgebildete Aufnahme wird nämlich gewährleistet, dass das Dichtungsmittel stets in seiner bestimmungsgemäßen korrekten Montageposition angeordnet ist. Wenn das Dichtungsmittel unter einer geringen Vorspannung gehalten ist, so hat dies den Vorteil, dass es nicht unbeabsichtigt beim Entnehmen des Staubauffangbehälters zu Reinigungszwecken aus seiner Montageposition herausfällt. Andererseits kann es leicht manuell entnommen werden.

Die genannte, vorzugsweise selbstzentrierend ausgebildete Aufnahme für das Dichtungsmittel am Gehäusekörper ist vorzugsweise einerseits vom Gehäusekörper und andererseits von einem Mündungsstutzen der Staubableitvorrichtung begrenzt.

In noch weitergehender Ausbildung der Erfindung liegt der Staubauffangbehälter über eine von seiner Wandung abstehende Rippe gegen das Dichtungsmittel an. Diese Rippe, die vorzugsweise dünner ausgebildet ist, als die übrigen Bereiche der Wandung des Staubauffangbehälters, kann sich dann in das nachgiebig elastische, insbesondere elastomere oder gummielastische Material des Dichtungsmittels eingraben und so eine zuverlässige Abdichtung bewirken. Durch das Eingraben wird eine labyrinthartige Dichtung erreicht. Die erwähnte Rippe ist dabei vorzugsweise verjüngt, jedoch gleichwohl an ihrem freien Ende verrundet auslaufend ausgebildet. Die Rippe kann nach einer weiteren Ausführungsform über einen Stirnrand der Wandung des Staubauffangbehälters in Aufsetzrichtung geringfügig überstehen.

Dadurch, dass der Benutzer selbst den Austausch des Dichtungsmittels vornehmen kann, ist auch eine erhebliche Kosteneinsparung erzielt, da das Gerät hierfür nicht zu einem Kundendienstservice gegeben werden muss. Durch die mehrfache Verwendung des Dichtungsmittels sind Wartungs- und Entsorgungskosten reduziert.

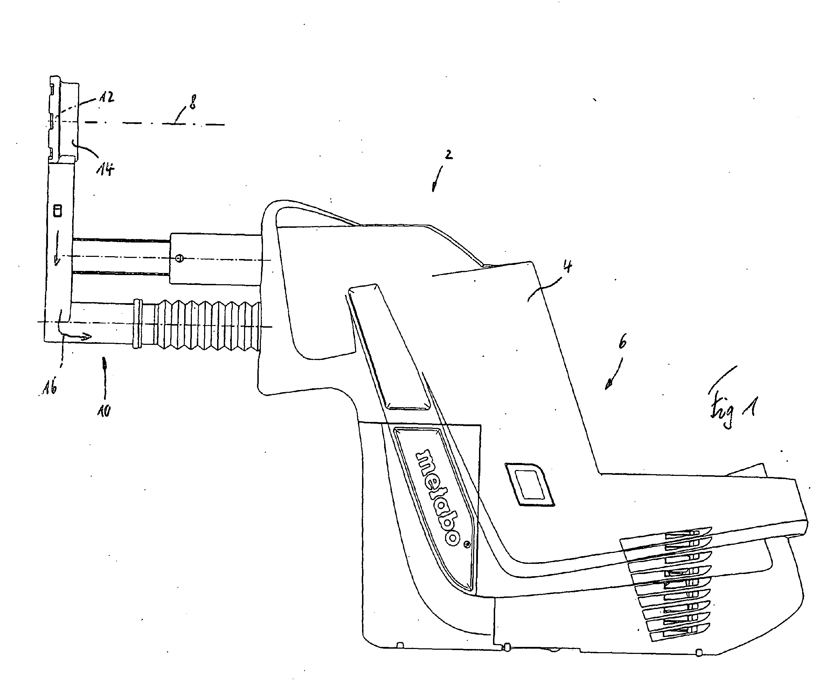

Weitere Merkmale, Einzelheiten und Vorteile der Erfindung ergeben sich aus den beigefügten Schutzansprüchen und aus der zeichnerischen Darstellung und nachfolgenden Beschreibung einer bevorzugten Ausführungsform der erfindungsgemäßen Absaugeinrichtung. In der Zeichnung zeigt
- Figur 1: eine Seitenansicht einer erfindungsgemäßen Absaugeinrichtung (jedoch ohne Elektrohandwerkzeuggerät) und
- Figur 2: eine weitere Seitenansicht der Absaugeinrichtung nach Figur 1, teilweise aufgebrochen.

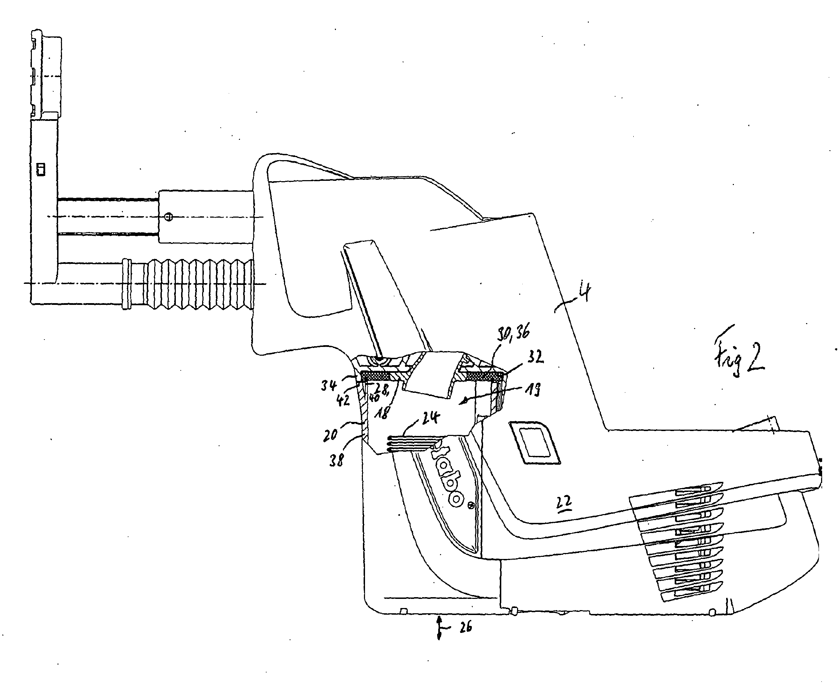

Die Figuren zeigen eine insgesamt mit dem Bezugszeichen 2 bezeichnete Absaugeinrichtung für ein motorisch angetriebenes Handwerkzeuggerät, insbesondere Elektrohandwerkzeuggerät, wie zum Beispiel ein Bohrhammer. Die Absaugeinrichtung umfasst einen Gehäusekörper 4, der mit einem stumpfwinklig ausgebildeten Gehäuseseitenbereich 6 an einen Bohrhammer lösbar, jedoch bei Betrieb des Bohrhammers fixiert, anbringbar ist. Das Werkzeug des Bohrhammers erstreckt sich dann entlang der angedeuteten Achse 8. Die Absaugeinrichtung 2 umfasst eine der jeweiligen Bohrtiefe entsprechend teleskopierbare Staubableitvorrichtung 10. Die Staubableitvorrichtung 10 kommuniziert mit einer Werkzeugansetzstelle 12, wo sie eine sogenannte Saugbrille 14 aufweist. Ausgehend von der Werkzeugansetzstelle 12 und der Saugbrille 14 ist ein Strömungspfad 16 durch die Staubableitvorrichtung 10 hindurch ausgebildet, der über einen Stutzen 18 (s. Figur 2) in das Innere einer Staubsammelvorrichtung 19 in Form eines Staubauffangbehälters 20 mündet. Der Staubauffangbehälter 20 und damit die Staubableitvorrichtung 10 sind von einer motorischen Unterdruck erzeugenden Vorrichtung beaufschlagbar, die sich im dargestellten Fall hinter einer Gehäusewandung im Bereich 22 des Gehäusekörpers 4 verbirgt. Auf diese Weise wird ein Saugluftstrom, ausgehend von der Werkzeugansetzstelle 12, durch die Staubableitvorrichtung 10 hindurch zum Staubauffangbehälter 20 und von dort in Richtung Unterdruck erzeugender Vorrichtung erzeugt. Bohrstaub sowie partikulärer Schmutz werden im Staubauffangbehälter 20 abgeschieden. Darin ist zusätzlich ein Filtermittel 24 vorgesehen, durch welches der Saugluftstrom hindurchtreten muss.

Der Staubauffangbehälter 20 ist in Richtung des Doppelpfeils 26 an den Gehäusekörper 4 ansetzbar, bzw. von dem Gehäusekörper 4 abnehmbar. Zwischen Gehäusekörper 4 und Staubauffangbehälter 20 sind Führungsmittel vorgesehen, durch welche der Staubauffangbehälter 20 beim Aufschieben auf den Gehäusekörper 4 seine bestimmungsgemäße Montageposition einnimmt. In dieser Montageposition liegt der Staubauffangbehälter 20 mit einem stirnseitigen Rand 28 gegen ein nachgiebiges Dichtungsmittel 30 an, welches gegen den Gehäusekörper 4 abgestützt ist. Auf diese Weise wird das Innere des Staubauffangbehälters 20 gegen außen abgedichtet. Das Dichtungsmittel 30 ist in einer Aufnahme 32 angeordnet, die im wesentlichen der Geometrie des Dichtungsmittels 30 entspricht und die einerseits vom Gehäusekörper 4 und andererseits von dem Mündungsstutzen 18 der Staubableitvorrichtung 10 begrenzt ist. Die Abmessungen dieser Aufnahme 32 sind derart, dass das Dichtungsmittel 30 gerade unter einer geringfügigen Vorspannung in der Aufnahme 32 gehalten ist, so dass es nicht von selbst herausfällt, wenn der Staubauffangbehälter 20 von dem Gehäusekörper 4 gelöst wird. Andererseits ist das Dichtungsmittel 30 in unmittelbarer Nähe von einem Rand 34 des Gehäusekörpers 4 angeordnet, so dass es gut manuell zugänglich und manuell greifbar ist, um ausgetauscht werden zu können. Im beispielhaft dargestellten Fall ist das Dichtungsmittel 30 von einer Flachdichtung 36 gebildet. Es kann in vorteilhafter Weise in zwei um 180° zueinander verkehrten Orientierung verwendet werden.

Im vorliegend dargestellten Fall liegt der Staubauffangbehälter 20 über eine von seiner Wandung 38 abstehenden Rippe 40 gegen das Dichtungsmittel 30 an. Die Rippe 40 steht über einen Stirnrand 42 der Wandung 38 des Staubauffangbehälters 20 in Aufsetzrichtung 26 geringfügig vor. Die Rippe 40 ist verjüngt, jedoch gleichwohl verrundet auslaufend ausgebildet und kann sich in das elastisch nachgiebige Material des Dichtungsmittels 30 eingraben. Auf diese Weise ist eine sehr effektive absolut dichtende Anlage des Staubauffangbehälters 20 gegen den Gehäusekörper 4 erreicht.

## Patentansprüche

1. Absaugeinrichtung (2) für ein motorisch angetriebenes Handwerkzeuggerät, insbesondere für einen Bohrhammer, mit einer Unterdruck erzeugenden Vorrichtung, mit einem Gehäusekörper (4) und mit Befestigungsmitteln zum lösbaren Fixieren des Gehäusekörpers (4) der Absaugeinrichtung an dem Handwerkzeuggerät, wobei die Absaugeinrichtung eine mit einer Werkzeugansetzstelle (12) kommunizierende Staubableitvorrichtung (10) und eine Staubsammelvorrichtung (19) umfasst, wobei die Staubsammelvorrichtung (19) einen vom Gehäusekörper (4) lösbaren, vorzugsweise Filtermittel (24) enthaltenden Staubauffangbehälter (20) umfasst, in den die Staubableitvorrichtung (10) einmündet, **dadurch gekennzeichnet, dass** der Staubauffangbehälter (20) von der Unterdruck erzeugenden Vorrichtung beaufschlagt ist und im Bereich der Einmündung (18) der Staubableitvorrichtung (10) in den Staubauffangbehälter (20) über ein nachgiebiges Dichtungsmittel (30) in axialer Richtung (26), in der der Staubauffangbehälter (26) an den Gehäusekörper (4) ansetzbar bzw. von dem Gehäusekörper (4) abnehmbar ist, dichtend gegen den Gehäusekörper (4) anliegt und dass das Dichtungsmittel (30) beim Lösen des Staubauffangbehälters (20) vom Gehäusekörper (4) zugänglich und manuell greifbar sowie werkzeuglos entnehmbar ist, und dass das Dichtungsmittel (30) eine ringscheibenförmige Flachdichtung (36) ist, die die Einmündung der Staubableitvorrichtung (10) in den Staubauffangbehälter (20) geschlossen ringförmig umgibt.

2. Absaugeinrichtung nach Anspruch 1, **dadurch gekennzeichnet, dass** das Dichtungsmittel (30) in einem Abstand von höchstens 40 mm, insbesondere von höchstens 30 mm, weiter insbesondere von höchstens 20 mm und vorzugsweise von höchstens 10 mm von einem Rand (34) des Gehäusekörpers (4) beabstandet ist, welcher Rand (34) eine Einsetzöffnung oder Ansetzöffnung für den Staubauffangbehälter (20) begrenzt.

3. Absaugeinrichtung nach Anspruch 1 oder 2, **dadurch gekennzeichnet, dass** das Dichtungsmittel (30) in zwei um 180° verdrehten Orientierungen montierbar ist.

4. Absaugeinrichtung nach einem der vorstehenden Ansprüche, **dadurch gekennzeichnet, dass** das Dichtungsmittel (30) in einer selbstzentrierenden Aufnahme (32) am Gehäusekörper (4) lose schwimmend oder unter einer geringen die Dichtung gerade vor Herausfallen haltenden Vorspannung angeordnet ist.

5. Absaugeinrichtung nach einem der vorstehenden Ansprüche, **dadurch gekennzeichnet, dass** das Dichtungsmittel (30) in einer Aufnahme (32) am Gehäusekörper (4) angeordnet ist und die Aufnahme (32) einerseits vom Gehäusekörper (4) und andererseits von einem Mündungsstutzen (18) der Staubableitvorrichtung (10) begrenzt ist.

6. Absaugeinrichtung nach einem der vorstehenden Ansprüche, **dadurch gekennzeichnet, dass** der Staubauffangbehälter (20) über eine von seiner Wandung (38) abstehende Rippe (40) gegen das Dichtungsmittel (30) anliegt.

7. Absaugeinrichtung nach einem der vorstehenden Ansprüche, **dadurch gekennzeichnet, dass** der Staubauffangbehälter (20) über eine Rippe (40) gegen das Dichtungsmittel (30) anliegt, die dünner ist als die Wandung (38) des Staubauffangbehälters (20).

8. Absaugeinrichtung nach Anspruch 6 oder 7, **dadurch gekennzeichnet, dass** die Rippe (40) verjüngt jedoch gleichwohl verrundet auslaufend ausgebildet ist.

9. Absaugeinrichtung nach Anspruch 6, 7 oder 8, **dadurch gekennzeichnet, dass** die Rippe (40) über einen Stirnrand (42) der Wandung (38) des Staubauffangbehälters (20) in Aufsetzrichtung (26) geringfügig übersteht.

## Claims

1. Suction device (2) for a motor-driven hand tool apparatus, in particular for a hammer drill, with a vacuum-generating device, with a housing body (4) and with means of attachment to removably attach the housing body (4) of the suction device to the hand tool apparatus, whereby the suction device comprises a dust removal device (10) in communication with a tool application point (12) and a dust collection device (19), whereby the dust collection device (19) comprises a dust collection container (20) containing a filtration means (24) preferably separable from the housing body (4), into which said dust collection container (20) the dust removal device (10) enters, **characterised in that** the vacuum generated by the said device is applied to the dust collection container (20), which, in the region of the entry point (18) of the dust removal device (10) into the dust collection container (20), abuts with a seal the housing body (4) by means of a flexible sealing means (30) in an axial direction (26) in which the dust collection container (26) can be attached to or detached from the housing body (4) and that, when the dust collection container (20) is detached from the housing body (4), the sealing means (30) can be accessed and manually grasped and removed without tools, and that the sealing means (30) is a washer-shaped flat seal (36) which surrounds like a closed ring the entry point of the dust removal device (10) into the dust collection container (20).

2. Suction device in accordance with claim 1, **characterised in that** the sealing means (30) is spaced with a gap of no more than 40 mm, in particular no more than 30 mm, furthermore particularly no more than 20 mm and preferably no more than 10 mm from a rim (34) of the housing body (4), said rim (34) bounding an insertion opening or attachment opening for the dust collection container (20).

3. Suction device in accordance with claim 1 or 2, **characterised in that** the sealing means (30) can be assembled in two orientations rotationally displaced by 180°.

4. Suction device in accordance with one of the preceding claims, **characterised in that** the sealing means (30) is arranged loosely floating in a self-centring recess (32) on the housing body (4) or is preloaded slightly to hold the seal from falling out.

5. Suction device in accordance with one of the preceding claims, **characterised in that** the sealing means (30) is arranged in a recess (32) on the housing body (4) and the recess (32) is bounded on one side by the housing body (4) and on the other side by an outlet connection (18) of the dust removal device (10).

6. Suction device in accordance with one of the preceding claims, **characterised in that** the dust collection container (20) abuts the sealing means (30) by means of a rib (40) projecting from its wall (38).

7. Suction device in accordance with one of the preceding claims, **characterised in that** the dust collection container (20) abuts the sealing means (30) by means of a rib (40) which is thinner than the wall (38) of the dust collection container (20).

8. Suction device in accordance with claim 6 or 7, **characterised in that** the rib (40) is formed so that it tapers but is nevertheless rounded at its extremity.

9. Suction device in accordance with claim 6, 7 or 8, **characterised in that** the rib (40) projects beyond a front edge (42) of the wall (38) of the dust collection container (20) in the attachment direction (26).

## Revendications

1. Dispositif d'aspiration (2) pour un outil à main motorisé, notamment pour un marteau perforateur, avec un dispositif produisant une dépression, avec un corps de boîtier (4) et avec des moyens de fixation pour la fixation amovible du corps de boîtier (4) du dispositif d'aspiration sur l'outil à main, sachant que le dispositif d'aspiration comprend un dispositif (10) d'évacuation des poussières, communiquant avec un point (12) d'application de l'outil, et un dispositif (19) de collecte des poussières, sachant que le dispositif (19) de collecte des poussières comprend un récipient collecteur de poussières (20), pouvant être détaché du corps de boîtier (4), contenant de préférence une matière filtrante (24) et dans lequel débouche le dispositif (10) d'évacuation des poussières, **caractérisé en ce que** le récipient collecteur de poussières (20) est sollicité par le dispositif produisant une dépression et, dans la région de l'embouchure (18) du dispositif (10) d'évacuation des poussières dans le récipient collecteur de poussières (20), s'applique en étanchéité, via un moyen d'étanchéité flexible (30), contre le corps de boîtier (4) en direction axiale (26), direction dans laquelle le récipient collecteur de poussières (20) peut être mis en place contre le corps de boîtier (4) ou respectivement déposé du corps de boîtier (4), **en ce que** le moyen d'étanchéité (30) est accessible lorsque le récipient collecteur de poussières (20) est détaché du corps de boîtier (4) et peut être saisi à la main et retiré sans outil, et **en ce que** le moyen d'étanchéité (30) est un joint d'étanchéité plat (36) en forme de rondelle annulaire, qui entoure en anneau fermé l'embouchure du dispositif (10) d'évacuation des poussières dans le récipient collecteur de poussières (20).

2. Dispositif d'aspiration selon la revendication 1, **caractérisé en ce que** le moyen d'étanchéité (30) se trouve à une distance d'au plus 40 mm, plus particulièrement d'au plus 30 mm, encore plus particulièrement d'au plus 20 mm et de préférence d'au plus 10 mm d'un bord (34) du corps de boîtier (4), le bord (34) délimitant une ouverture d'insertion ou de mise en place pour le récipient collecteur de poussières (20).

3. Dispositif d'aspiration selon la revendication 1 ou 2, **caractérisé en ce que** le moyen d'étanchéité (30) peut être monté dans deux orientations tournées de 180°.

4. Dispositif d'aspiration selon l'une des revendications précédentes, **caractérisé en ce que** le moyen d'étanchéité (30) est disposé dans un logement autocentreur (32) sur le corps de boîtier (4) en montage flottant libre ou sous une légère précontrainte empêchant tout juste le joint d'étanchéité de tomber.

5. Dispositif d'aspiration selon l'une des revendications précédentes, **caractérisé en ce que** le moyen d'étanchéité (30) est disposé dans un logement (32) sur le corps de boîtier (4), et le logement (32) est délimité par le corps de boîtier (4) d'une part, et par un embout (18) du dispositif (10) d'évacuation des poussières d'autre part.

6. Dispositif d'aspiration selon l'une des revendications précédentes, **caractérisé en ce que** le récipient collecteur de poussières (20) s'applique contre le moyen d'étanchéité (30) par l'intermédiaire d'une nervure (40) faisant saillie de sa paroi (38).

7. Dispositif d'aspiration selon l'une des revendications précédentes, **caractérisé en ce que** le récipient collecteur de poussières (20) s'applique contre le moyen d'étanchéité (30) par l'intermédiaire d'une nervure (40) qui est plus mince que la paroi (38) du récipient collecteur de poussières (20).

8. Dispositif d'aspiration selon la revendication 6 ou 7, **caractérisé en ce que** la nervure (40) est configurée à section décroissante mais en se terminant néanmoins en arrondi.

9. Dispositif d'aspiration selon la revendication 6, 7 ou 8, **caractérisé en ce que** la nervure (40) dépasse légèrement d'un bord frontal (42) de la paroi (38) du récipient collecteur de poussières (20) dans la direction de pose (26).
